# EUROPÄISCHE PATENTSCHRIFT

(11) **EP 1 957 551 B1**
(45) Veröffentlichungstag und Bekanntmachung des Hinweises auf die Patenterteilung: **13.10.2010**
(21) Anmeldenummer: 06818683.2
(22) Anmeldetag: 21.11.2006
(51) Int. Cl.: C08G 18/08, C08G 18/80, C09D 175/04

(54) **HERSTELLUNG EINER VERNETZER-DISPERSION MIT BLOCKIERTEN ISOCYANATGRUPPEN**
PRODUCTION OF A CROSSLINKER DISPERSION COMPRISING BLOCKED ISOCYANATE GROUPS
PRODUCTION D'UNE DISPERSION RETICULEE AU MOYEN DE GROUPES D'ISOCYANATE BLOQUES

(30) Priorität: 01.12.2005 DE 102005057336
(43) Veröffentlichungstag der Anmeldung: 20.08.2008
(73) Patentinhaber: Bayer MaterialScience AG, 51368 Leverkusen (DE)
(72) Erfinder: DÖRR, Sebastian, 40597 Düsseldorf (DE); MÜLLER, Heino, 51375 Leverkusen (DE); BLUM, Harald, 51375 Leverkusen (DE)
(86) Internationale Anmeldenummer: PCT/EP2006/011118
(87) Internationale Veröffentlichungsnummer: WO 2007/062760

(56) Entgegenhaltungen:
- EP-A1- 0 942 023
- WO-A-01/64770
- WO-A1-03/006524

## Beschreibung

Die vorliegende Erfindung betrifft die Herstellung wässriger, colösemittelfreier PUR-Dispersionen mit blockierten Isocyanatgruppen, daraus hergestellte Einbrennlacke und deren Verwendung in Beschichtungen.

In den letzten Jahren stieg die Bedeutung wässriger Lacke und Beschichtungsmittel aufgrund immer strengerer Emissionsrichtlinien bezüglich der bei der Lackapplikation freiwerdenden Lösemittel stark an. Obwohl inzwischen bereits für viele Anwendungsbereiche wässrige Lacksysteme zur Verfügung stehen, können diese das hohe Qualitätsniveau konventioneller, lösemittelhaltiger Lacke hinsichtlich Lösemittel- und Chemikalienbeständigkeit oder auch Elastizität und mechanischer Belastung oftmals nicht erreichen.

Auch Wasserlacksysteme, z.B. basierend auf wässrigen Dispersionen, enthalten häufig noch Colösemittel. Die Vermeidung dieser Lösemittel bei PUR-Dispersionen gelingt im Allgemeinen nicht, da die Herstellung entsprechender Dispersionen über Prepolymere oft Colösemittel erfordert. Auch die Lagerstabilität der PUR-Dispersionen und der Lackformulierungen ist ohne Colösemittel häufig nicht gegeben. Insbesondere das Lösemittel NMP (*N*-Methylpyrrolidon) ist im Bereich der wässrigen Dispersionen und Lacke weit verbreitet. Beispiele sind die Polyisocyanat-Vemetzerdispersionen mit blockierten Isocyanatgruppen, die in EP-A 0566953 oder in EP-A 0942023 beschrieben sind. Die Vemetzerdispersionen und die daraus hergestellten Lacke enthalten alle NMP als Colösemittel.

Das Lösemittel NMP eignet sich zur Herstellung vieler PUR-Dispersionen, wird aber von der Europäischen Union als teratogen eingestuft. Daher sollte dieses Lösemittel in Zukunft möglichst vermieden werden.

Aufgabe war also die Bereitstellung colösemittelfreier lagerstabiler Polyisocyanatdispersionen mit blockierten Isocyanatgruppen.

Es wurde nun gefunden, dass diese Aufgabe durch ein spezielles Herstellungsverfahren gelöst werden konnte. Gegenstand der Erfindung ist ein Verfahren zur Herstellung von Polyisocyanatdispersionen, bei dem
a) die NCO-Gruppen einer Polyisocyanatkomponente mit
b) 50 bis 90 Äquivalent-%, bevorzugt 55 bis 80 Äquivalent-%, bezogen auf die NCO-Gruppen der Komponente a) eines thermisch abspaltbaren Blockierungsmittels,
c) 10 bis 50 Äquivalent-%, bevorzugt 15 bis 40 Äquivalent-%, bezogen auf die NCO-Gruppen der Komponente a) einer Hydroxycarbonsäure als Hydrophilierungsmittel und
d) 0 bis 15 Äquivalent-%, bevorzugt 3 bis 12 Äquivalent-%, bezogen auf die NCO-Gruppen der Komponente a) einer mindestens, bezogen auf isocyanatreaktiven Gruppen, difunktionellen Kettenverlängerungskomponente, umgesetzt wird, wobei
die Komponenten c) und/oder d) in dem Blockierungsmittel b) zunächst gelöst, anschließend zu der Isocyanatkomponente a) gegeben werden und gegebenenfalls weitere Komponente c) ungelöst zugegeben wird und vor, während oder nach der Dispergierung des Polyurethan-Polymers in Wasser die Carbonsäuregruppen der Hydroxycarbonsäure mit einer Base e) neutralisiert werden.

Die Mengenverhältnisse der Reaktionspartner werden bevorzugt so gewählt, dass das Äquivalent-Verhältnis der NCO-Gruppen der Isocyanatkomponente a) zu gegenüber Isocyanat reaktionsfähigen Gruppen der Komponenten b), c) und d) bei 1:0,6 bis 1:1,5 und besonders bevorzugt bei 1:0,7 bis 1:1,3 liegt.

Dabei kann die Mischung aus b), c) und d) gegebenenfalls erwärmt werden, ein bevorzugter Temperaturbereich ist 10°C bis 90°C. Es ist auch möglich, ein wasser(teil)mischbaren Lösemittel wie Aceton oder Methylethylketon dem Gemisch zuzugeben. Nach Abschluss der Reaktion und Dispergierung kann das Lösemittel durch Destillation entfernt werden.

Als Polyisocyanate werden dazu in a) die dem Fachmann an sich bekannten NCO-funktionellen Verbindungen einer Funktionalität von bevorzugt 2 oder mehr eingesetzt. Dies sind typischerweise aliphatische, cycloaliphatische, araliphatische und/oder aromatische Di- oder Triisocyanate sowie deren höhermolekulare Folgeprodukte mit Urethan-, Allophanat-, Biuret-, Uretdion- und/oder Isocyanuratgruppen, die zwei oder mehr freie NCO-Gruppen aufweisen.

Bevorzugte Di- oder Polyisocyanate sind Tetramethylendiisocyanat, Cyclohexan-1,3- und 1,4-diisocyanat, Hexamethylendiisocyanat (HDI), 1-Isocyanato-3,3,5-trimethyl-5-isocyanato-methylcyclohexan (Isophorondiisocyanat, IPDI), Methylen-bis-(4-isocyanatocyclohexan), Tetramethylxylylendiisocyanat (TMXDI), Triisocyanatononan, Toluylendiisocyanat (TDI), Di-phenylmethan-2,4'-und/oder 4,4'-diisocyanat (MDI), Triphenylmethan-4,4'-diisocyanat, Naphtylen-1,5-diisocyanat, 4-Isocyanatomethyl-1,8-octandiisocyanat (Nonantriisocyanat, Triisocyanatononan, TIN) und/oder 1,6,11 - Undecantriisocyanat sowie deren beliebige Mischungen.

Solche Polyisocyanate haben typischerweise Isocyanatgehalte von 0,5 bis 55 Gew.-%, bevorzugt 3 bis 30 Gew.-%, besonders bevorzugt 5 bis 25 Gew.-%.

Besonders bevorzugte Polyisocyanate a) zur Herstellung der erfindungsgemäßen hydrophilierten Polyisocyanate bzw. Polyurethane entsprechen der vorstehend genannten Art und weisen Biuret-, Isocyanurat- und/oder Uretdiongruppen auf und basieren bevorzugt dabei auf Hexamethylendiisocyanat, Isophorondiisocyanat und/oder 4,4'-Diisocyanatodicyclohexylmethan.

Geeignete Blockierungsmittel b) sind beispielsweise ε-Caprolactam, Malonsäurediethylester, Acetessigsäureethylester, Oxime wie Butanonoxim, Diisopropylamin, Esteramine wie Alkylalaninester, Dimethylpyrazol, Triazol bzw. deren Gemische und ggf. auch weitere Blockierungsmittel. Bevorzugt sind Benzyl-tert.-butylamin, Butanonoxim, Diisopropylamin, 3,5-Dimethylpyrazol, Triazol und/oder deren Gemische.

Beispiele für Hydroxycarbonsäuren c) sind Mono- und Dihydroxycarbonsäuren, wie 2-Hydroxyessigsäure, 3-Hydroxypropansäure, 12-Hydroxy-9-octadecansäure (Rizinolsäure), Hydroxypivalinsäure, Milchsäure und/oder Dimethylolpropionsäure. Bevorzugt sind Hydroxypivalinsäure, Milchsäure und/oder Dimethylolpropionsäure, besonders bevorzugt ist Hydroxypivalinsäure.

Zusätzlich zu der Hydrophilierung durch mindestens eine Hydroxycarbonsäure können noch geeignete nichtionisch hydrophilierend wirkende Verbindungen eingesetzt werden Dies sind z.B. Polyoxyalkylenether, die mindestens eine Hydroxy- oder Aminogruppe enthalten. Diese Polyether enthalten einen Anteil von 30 Gew.-% bis 100 Gew.-% an Ethylenoxid enthaltenden Bausteinen. In Frage kommen linear aufgebaute Polyether einer Funktionalität zwischen 1 und 3, aber auch verzweigte Polyether.

Nichtionisch hydrophilierend wirkende Verbindungen sind beispielsweise auch einwertige, im statistischen Mittel 5 bis 70, bevorzugt 7 bis 55 Ethylenoxideinheiten pro Molekül aufweisende Polyalkylenoxidpolyetheralkohole, wie sie in an sich bekannter Weise durch Alkoxylierung geeigneter Startermoleküle zugänglich sind (z.B. in Ullmanns Encyclopädie der technischen Chemie, 4. Auflage, Band 19, Verlag Chemie, Weinheim S. 31-38).

Bei den Polyalkylenoxidpolyetheralkoholen handelt es sich entweder um reine Polyethylenoxidpolyether oder gemischte Polyalkylenoxidpolyether, deren Alkylenoxideinheiten zu mindestens 30 mol-% bevorzugt zu mindestens 40 mol-% aus Ethylenoxideinheiten bestehen. Bevorzugte nichtionische Verbindungen sind monofunktionelle gemischte Polyalkylenoxidpolyether, die mindestens 40 mol-% Ethylenoxid- und maximal 60 mol-% Propylenoxideinheiten aufweisen.

Als Kettenverlängerungskomponente d) kommen beispielsweise Di-, Tri- und/oder Polyole in Betracht. Beispiele sind Ethandiol, Di-, Tri-, Tetraethylenglykol, 1,2-Propandiol, Di-, Tri-, Tetrapropylenglykol, 1,3-Propandiol, Butandiol-1,4, Butandiol-1,3, Butandiol-2,3, Pentandiol-1,5, Hexandiol-1,6, 2,2-Dimethyl-1,3-propandiol, 1,4-Dihydroxycyclohexan, 1,4-Dimethylolcyclohexan, Octandiol-1,8, Decandiol-1,10, Dodecandiol-1,12, Trimethylolpropan, Rizinusöl, Glycerin und/oder Gemische der genannten Produkten, ggf. mit weiteren Di-, Tri- und/oder Polyolen. Auch ethoxilierte und/oder propoxilierte Di-, Tri- und/oder Polyole wie z.B. ethoxiliertes und/oder propoxiliertes Trimethylolpropan, Glycerin und/oder Hexandiol-1,6 können eingesetzt werden.

Weiterhin können Di-, Tri- und/oder Polyamine mit primären und/oder sekundären Aminogruppen eingesetzt werden. Beispiele sind Ethylendiamin, 1,3-Propylendiamin, 1,6-Hexamethylendiamin, Isophorondiamin, 4,4'-Diaminodicyclohexylmethan oder Hydrazin.

Auch Gemische von Aminen und Alkoholen sind möglich, ebenso gemischt-funktionelle Verbindungen. Moleküle mit verschiedenen isocyanatreaktiven Gruppen können eingesetzt werden, wie z.B. N-Methylethanol- und N-Methylisopropanolamin, 1-Amino-propanol, Diethanolamin, 1,2-Hydroxyethanthiol oder 1-Aminopropanthiol.

Beispiele für in e) eingesetzte Neutralisationsmittel sind basische Verbindungen wie Natriumhydroxid, Kaliumhydroxid, Triethylamin, N,N-Dimethylaminoethanol, Dimethylcyclohexylamin, Triethanolamin, Methyldiethanolamin, Diisopropanolamin, Ethyldiisopropylamin, Diisopropylcyclohexylamin, N-Methylmorpholin, 2-Amino-2- methyl-1-propanol, Ammoniak oder deren beliebige Gemische. Bevorzugte Neutralisationsmittel sind tert. Amine wie Triethylamin, Diisopropylhexylamin und N,N-Dimethylethanolamin, besonders bevorzugt ist N,N-Dimethylethanolamin.

Die Menge des eingesetzten Neutralisationsmittels wird im Allgemeinen so bemessen, dass der Neutralisationsgrad der in den erfindungsgemäßen Polyurethanen vorhandenen Carbonsäuregruppen (molares Verhältnis von eingesetztem Amin/Hydroxid zu vorhandenen Säuregruppen) mindestens 40 %, bevorzugt 70 % bis 130 %, besonders bevorzugt 90 bis 110 % beträgt. Die Neutralisation kann dabei vor, während oder nach dem Dispergier- bzw. Löseschritt erfolgen. Bevorzugt ist jedoch die Neutralisation vor der Wasserzugabe.

Es ist auch möglich, ein wasser(teil)mischbaren Lösemittel wie Aceton oder Methylethylketon dem Reaktionsgemisch zuzugeben. Nach Abschluss der Reaktion wird Wasser dem Reaktionsgemisch zugefügt und das Lösungsmittel abdestilliert. Dies wird auch als Aceton- bzw. Slurry-Verfahren bezeichnet. Der Vorteil dieser Verfahrensweise liegt in einer reduzierten Viskosität bei der Herstellung des Prepolymers, ohne dass das Lösemittel in der fertigen Dispersion noch vorhanden ist.

Die wässrigen Dispersionen bzw. Lösungen weisen im allgemeinen einen Festkörpergehalt von 15 bis 65 Gew.-%, bevorzugt von 25 bis 60 Gew.-%, besonders bevorzugt von 30 bis 50 Gew.-% auf. Die mittlere Partikeldurchmesser liegen im allgemeinen im Bereich von 5 bis 200 nm, bevorzugt von 8 bis 150 nm, besonders bevorzugt von 10 bis 100 nm.

Es ist ebenfalls möglich, dem Reaktionsgemisch Katalysatoren zuzusetzen. Geeignete Katalysatoren sind beispielsweise tertiäre Amine, Zinn-, Zink- oder Wismuthverbindungen oder basische Salze. Bevorzugt sind Dibutylzinndilaurat und Dibutylzinnoctoat.

Die erfindungsgemäßen blockierten Polyisocyanate-Dispersionen werden zur Herstellung von Einbrennlacken, zur Beschichtung von Substraten, vorzugsweise aus Metallen, mineralischen Stoffen, Holz, Kunststoffen, z.B. für die Industrielackierung, bei der Textilbeschichtung und bei der Automobilerstlackierung verwendet. Hierzu können die erfindungsgemäßen Überzugsmittel durch Rakeln, Tauchen, Spritzauftrag wie Druckluft- oder Airless-Spritzen, sowie durch elektrostatischen Auftrag, beispielsweise Hochrotationsglockenauftrag, aufgetragen werden. Die Trockenfilm-Schichtdicke kann beispielsweise bei 10 bis 120 µm liegen. Das Aushärten der getrockneten Filme erfolgt durch Einbrennen im Temperaturbereich von 90 bis 190°C, bevorzugt 120 bis 180°C, besonders bevorzugt 130 bis 170°C.

Zur Herstellung von Beschichtungsmitteln, Klebstoffen und Elastomeren können die erfmdungsgemäßen Polyisocyanat-Vemetzerdispersionen mit blockierten Isocyanatgruppen mit mindestens difunktionellen, isocyanatreaktiven Verbindungen z.B. beliebigen Polyolkomponenten, vorzugsweise in Form wässriger Dispersionen, gemischt werden.

Solche Polyolkomponenten können Polyhydroxypolyester, Polyhydroxypolyurethane, Polyhydroxypolyether, Polycarbonatdiole oder Hydroxylgruppen aufweisende Polymerisate, z.B. die an sich bekannten Polyhydroxypolyacrylate, Polyacrylat-polyurethane und/oder Polyurethan-polyacrylate sein. Diese weisen im Allgemeinen eine Hydroxylzahl von 20 bis 200, vorzugsweise von 50 bis 130 mg KOH/g auf. Die gegebenenfalls erforderliche hydrophile Modifizierung dieser Polyhydroxylverbindungen erfolgt nach an sich bekannten Methoden, wie sie beispielsweise in EP-A-0 157 291 oder EP-A-0 427 028 offenbart sind. Auch eine Mischung mit anderen alkoholreaktiven Verbindungen wie z.B. Aminovernetzerharze wie beispielsweise Melaminharzen und/oder Harnstoffharzen zur zusätzlichen Vernetzung beim Einbrennen ist möglich.

Die Herstellung der Lacke, Farben, Klebstoffe und anderen Formulierungen aus den erfmdungsgemäßen Dispersionen erfolgt nach an sich bekannten Methoden. Außer den blockierten Polyisocyanaten und Polyolen können den Formulierungen übliche Additive und andere Hilfsstoffe (z.B. Pigmente, Füllstoffe, Verlaufsmittel, Entschäumer, Katalysatoren) zugesetzt werden.

### Beispiele

### Chemikalien

### Desmodur^{®} N 3300 :

Isocyanurat auf Basis von Hexamethylendiisocyanat, Bayer MaterialScience AG, Leverkusen, DE

### Bayhydrol^{®} D 270

Hydroxylgruppenhaltige, wässrige Polyesterdispersion" Bayer MaterialScience AG, Leverkusen, DE

### Additol XW 395

Verlaufshilfsmittel/Entschäumer, UCB Chemicals, St. Louis, USA

### Surfynol 104

Verlaufshilfsmittel/Entschäumer, Air Products, Hattingen, DE

### Hydroxypivalinsäure

Perstorp Specialty Chemicals AB, Perstorp, Schweden

Sofern nicht abweichend vermerkt, beziehen sich alle Prozentangaben auf Gewichtsprozent.

Sofern nicht abweichend vermerkt, beziehen sich alle analytischen Messungen auf Temperaturen von 23°C.

Die angegebenen Viskositäten wurden mittels Rotationsviskosimetrie nach DIN 53019 bei 23°C mit einem Rotationsviskosimeter der Firma Anton Paar Germany GmbH, Ostfildern, DE bestimmt.

NCO-Gehalte wurden, wenn nicht ausdrücklich anders erwähnt, volumetrisch gemäß DIN-EN ISO 11909 bestimmt.

Die angegebenen Partikelgröße wurden mittels Laserkorrellationsspektroskopie (Gerät: Malvern Zetasizer 1000, Malver Inst. Limited) bestimmt.

Die Festkörpergehalte wurden ermittelt durch Erhitzen einer ausgewogenen Probe auf 120°C. Bei Gewichtskonstanz wurde durch erneutes Auswiegen der Probe Festkörpergehalt berechnet.

Die Kontrolle auf freie NCO-Gruppen wurde mittels IR-Spektroskopie (Bande bei 2260 cm⁻¹) durchgeführt.

### 1) Vergleichsbeispiel 1: Vernetzerdispersion, nicht erfindungsgemäß, Herstellung in NMP als Lösemittel

In einer Rührapparatur wurden 214,50 g (1,1 Val) Desmodur N 3300 in 81 g NMP vorgelegt und unter Stickstoff auf 50°C aufgeheizt. Dazu tropfte man 60,98 g (0,7 Val) Butanonoxim innerhalb von ca. einer Stunde dazu und ließ ca. 2 Stunden bei 80-90°C Rühren, bis ein konstanter Isocyanatwert erreicht war (Theorie: 6,09 %, erzielt: 6,04 %).

Anschließend wurden 5,91 g (0,1 Val) 1,6-Hexandiol und 23,60 g (0,2 Val) Hydroxypivalinsäure zugesetzt und bei einer Temperatur von ca. 90°C weiter gerührt, bis IR-spektroskopisch keine Isocyanat-Gruppen mehr nachweisbar waren (ca. 15 Stunden).

Danach wurde auf 85°C abgekühlt, und es wurden 19,81 g (0,220 Val) N,N-Dimethyl-ethanolamin zugegeben, 10 Min. nachgerührt und unter starkem Rühren 478,00 g 50°C warmes entionisiertes Wasser zugegeben. Nun wurde 2 Stunden bei 50°C gerührt und anschließend unter Rühren auf Raumtemperatur abgekühlt (in ca. 3 Stunden).

Die erhaltene Dispersion hatte nachfolgende Eigenschaften:

| | |
|---|---|
| Feststoffgehalt: | ca. 38 % |
| pH-Wert: | ca. 8,66 |
| Viskosität | ca. 6400 mPas |
| | (23°C, Rotationsviskosimeter) |
| Partikelgröße(LKS): | 14 nm |
| Colöser: | 5 % NMP |

### 2) Vergleichsbeispiel 2: Vernetzerdispersion, nicht erfindungsgemäß, Zugabe von Kettenverlängerer und Hydrophilierungsmittel nach der Zugabe des Blockierungsmittels

In einer Rührapparatur wurden 214,50 g (1,1 Val) Desmodur N 3300 vorgelegt und unter Stickstoff auf 50°C aufgeheizt. Dazu tropfte man 60,98 g (0,7 Val) Butanonoxim innerhalb von ca. einer Stunde dazu und lies ca. 2 Stunden bei 80-90°C Rühren, bis ein konstanter Isocyanatwert erreicht war (Theorie: 6,09 %, erzielt: 6,04 %).

Anschließend werden 5,91 g (0,1 Val) 1,6-Hexandiol und 23,60 g (0,2 Val) Hydroxypivalinsäure zugesetzt und bei einer Temperatur von ca. 90°C weiter gerührt, bis IR-spektroskopisch keine Isocyanat-Gruppen mehr nachweisbar waren (ca. 15 Stunden).

Danach wurde auf 85°C abgekühlt, und es wurden 19,81 g (0,220 Val) N,N-Dimethyl-ethanolamin zugegeben, 10 Min. nachgerührt und unter starkem Rühren 478,00 g 50°C warmes entionisiertes Wasser zugegeben. Nun wurde 2 Stunden bei 50°C gerührt und anschließend unter Rühren auf Raumtemperatur abgekühlt (in ca. 3 Stunden).

Die erhaltene Dispersion hatte nachfolgende Eigenschaften:

| | |
|---|---|
| Feststoffgehalt: | ca. 38 % |
| pH-Wert: | ca. 9,1 |
| Viskosität | ca. 1500 mPas |
| | (23°C, Rotationsviskosimeter) |
| Partikelgröße(LKS): | 68 nm |

Die erhaltene Dispersion war nicht lagerstabil, innerhalb weniger Tage fiel sowohl bei Raumtemperatur-Lagerung als auch bei Lagerung im Klimaschrank bei 40°C ein Bodensatz aus. Das Produkt war daher nicht für Beschichtungen einsetzbar.

### 3) Vergleichsbeispiel 3: Vernetzerdispersion, nicht erfindungsgemäß, Zugabe von Kettenverlängerer und Hydrophilierungsmittel vor der Zugabe des Blockierungsmittels

In einer Rührapparatur wurden 214,50 g (1,1 Val) Desmodur N 3300 vorgelegt und unter Stickstoff auf 50°C aufgeheizt. Dazu gab man 5,91 g (0,1 Val) 1,6-Hexandiol und 23,60 g (0,2 Val) Hydroxypivalinsäure und ließ ca. 2 Stunden bei 80-90°C Rühren, bis ein konstanter Isocyanatwert erreicht war (Theorie: 6,09 %). Dabei wurde der Reaktionsansatz sehr viskos und wickelte sich um den Rührer, eine Durchmischung war nicht mehr gegeben.

Durch die hohe Viskosität konnte der Versuch nicht mehr weiter bearbeitet werden, er wurde daher abgebrochen.

### 4) Vergleichsbeispiel 4: Vernetzerdispersion, nicht erfindungsgemäß, Zugabe von Kettenverlängerer und Hydrophilierungsmittel vor der Zugabe des Blockierungs-mittels, Herstellung im Acetonverfahren

Es wurde wie in Vergleichsbeispiel 2 beschrieben gearbeitet, jedoch wurde das Desmodur N 3300 in 100 g Aceton gelöst. Die Temperaturkontrolle erfolgte durch den Rückfluss des Acetons bei Atmosphärendruck, es stellte sich eine Temperatur von knapp 70°C ein. Nach Zugabe von 1,6-Hexandiol und 23,60 g (0,2 Val) Hydroxypivalinsäure wickelte sich das Prepolymer nach ca. 2 Stunden um den Rührer. Weitere Zugabe von 100 g Aceton konnte das Prepolymer nicht auflösen, so dass der Versuch abgebrochen wurde.

Es zeigte sich, dass auch eine Variante mit Aceton als Colöser nicht zu der gewünschten Vernetzerdispersion führt.

### 5) Vernetzerdispersion, erfindungsgemäß, Zugabe von einer Lösung des Kettenverlängerers und des Hydrophilierungsmittels in dem Blockierungsmittel

In einer Rührapparatur wurden 214,50 g (1,1 Val) Desmodur N 3300 vorgelegt und unter Stickstoff auf 50°C aufgeheizt. Dazu wurde eine Lösung von 5,91 g (0,1 Val) 1,6-Hexandiol und 23,60 g (0,2 Val) Hydroxypivalinsäure in 60,98 g (0,7 Val) Butanonoxim innerhalb von ca. einer Stunde zugetropft, so dass eine Temperatur von 90°C nicht überschritten wurde. Anschließend wurde bei 90°C weiter gerührt, bis IR-spektroskopisch keine Isocyanat-Gruppen mehr nachweisbar waren (ca. 12 Stunden).

Danach wurde auf 85°C abgekühlt, und 19,81 g (0,220 Val) N,N-Dimethyl-ethanolamin zugegeben, 10 Min. nachgerührt und unter starkem Rühren 478,00 g 50°C warmes entionisiertes Wasser zugegeben. Nun wurde 2 Stunden bei 50°C gerührt und anschließend unter Rühren auf Raumtemperatur abgekühlt (in ca. 3 Stunden).

Die erhaltene gelbe, sehr feinteilige Dispersion hatte nachfolgende Eigenschaften:

| | |
|---|---|
| Feststoffgehalt: | ca. 38 % |
| pH-Wert: | ca. 9,1 |
| Viskosität | ca. 1600 mPas |
| | (23°C, Rotationsviskosimeter) |
| Partikelgröße(LKS): | 17 nm |

Die erhaltene Dispersion war lagerstabil, sowohl bei Raumtemperatur-Lagerung als auch bei Lagerung im Klimaschrank bei 40°C war innerhalb von 3 Monaten kein Bodensatz erkennbar.

### Anwendungstechnischer Teil

Es wurde ein Klarlack nachfolgender Zusammensetzung hergestellt. Aus den Klarlacken wurden Filme hergestellt, 10 Min. bei Raumtemperatur getrocknet und anschließend 30 Min. bei 165°C eingebrannt. Die erhaltenen Filme wurden anwendungstechnisch beurteilt. Die Ergebnisse sind in der folgenden Tabelle zusammengestellt.

**Tabelle 1: Anwendungstechnischer Test**

| (Mengenangaben in Gramm) | | | |
|---|---|---|---|
| **Beispiel Nr.** | **5** | **6 (Vergleich)** | **7 (Vergleich, NMP-haltig)** |
| Dispersion aus Beispiel | 4 | 2 | 1 |
| Menge der Dispersion | 91,1 | 91,1 | 91,1 |
| Desmophen^{®} D 270 | 50,0 | 50,0 | 50,0 |
| Additol XW 395 | 1,1 | 1,1 | 1,1 |
| Surfynol 104 | 1,1 | 1,1 | 1,1 |
| Dest. Wasser | 66,3 | 66,3 | 66,3 |
| Festkörper im Lack, Theorie | 31,9 | 31,9 | 31,9 |
| Auslaufzeit der Lackformulierung [s] ^{[3]} | 38 | [5] | 39 |
| Einbrennbedingungen | 10'RT + 20'165°C | 10'RT + 20'165°C | 10'RT + 20'165°C |
| Filmoptik (Sichtprüfung) | o.k. | Klumpen, Verlaufsstörung | o.k. |
| Pendelhärte [s] ^{[2]} | 103 | [5] | 101 |
| Salzsprühtest 144 h; Unterwanderung in mm ^{[4]} | 20 | [5] | 28 |
| Anlösbarkeit ^{[1]} | 2/2/4/4 | [5] | 2/3/4/4 |

| | | | |
|---|---|---|---|
| [1] 1 Minute, Reihenfolge der Lösungsmittel: Xylol/Methoxypropylacetat/Ethylacetat/Aceton Beurteilung: 0 sehr gut bis 5 schlecht [2] Die Messung der Pendelhärten erfolgte nach der Methode von König entsprechend DIN 53157. [3] Die Auslaufzeit wurde in einem Becher nach DIN 53 211 ermittelt. [4] Für den Salzsprühtest werden die Lacke mittels Fließbecherpistole auf Stahlbleche gespritzt und eingebrannt. Der Salzsprühtest erfolgte gemäß DIN 53 167. [5] Durchführung nicht möglich, da die Dispersion bei Testbeginn bereits einen erheblichen Bodensatz enthielt. Dieser Bodensatz verhinderte eine zuverlässige lacktechnische Ausprüfung durch anwendungstechnische Tests. | | | |

Es zeigte sich in der anwendungstechnischen Prüfung, dass der hergestellte Lack 5) aus der erfindungsgemäßen Dispersion 4) den Erfordernissen hinsichtlich Verlauf, Härte und Lösemittelfestigkeit und Salzsprühtest entsprach. Bei der Lackformulierung wurde kein Lösemittel zugesetzt.

In Beispiel 6) ist erkennbar, das mit einem vergleichbar zusammengesetzten System ohne Colöser keine akzeptable Lackformulierung erzielt werden konnte, wenn die Dispersion nicht nach dem erfindungsgemäßen Verfahren hergestellt wird.

Beispiel 7) zeigt eine vergleichbare, NMP-haltige Dispersion. Die lacktechnischen Eigenschaften sind vergleichbar zu dem erfindungsgemäßen Beispiel 5, aber die Unterwanderung im Salzsprühtest ist schlechter.

## Patentansprüche

1. Verfahren zur Herstellung von Polyisocyanatdispersionen, bei denen
a) Die NCO-Gruppen einer Polyisocyanatkomponente mit
b) 50 bis 90 Äquivalent-% bezogen auf die NCO-Gruppen der Komponente a) eines thermisch abspaltbaren Blockierungsmittels,
c) 10 bis 45 Äquivalent-% bezogen auf die NCO-Gruppen der Komponente a) einer Hydroxycarbonsäure als Hydrophilierungsmittel und gegebenenfalls
d) 0 bis 15 Äquivalent-% bezogen auf die NCO-Gruppen der Komponente a) einer mindestens, bezogen auf isocyanatreaktiven Gruppen, difunktionellen Kettenverlängerungskomponente, umgesetzt wird, wobei
die Komponenten c) und/oder d) in dem Blockierungsmittel b) zunächst gelöst, anschließend zu der Isocyanatkomponente a) gegeben werden und gegebenenfalls weitere Komponente c) ungelöst zugegeben wird und vor, während oder nach der Dispergierung des Polyurethan-Polymers in Wasser die Carbonsäuregruppen der Hydroxycarbonsäure mit einer Base e) neutralisiert werden.

2. Verfahren gemäß Anspruch 1 **dadurch gekennzeichnet, dass** das Äquivalent-Verhältnis der NCO-Gruppen der Isocyanatkomponente zu den gegenüber Isocyanatgruppen reaktionsfähigen Gruppen der anderen Komponenten 1:0,6 bis 1:1,5 liegt beträgt.

3. Verfahren gemäß einem der Ansprüche 1 oder 2, **dadurch gekennzeichnet, dass** in a) Polyisocyanate mit Biuret-, Isocyanurat- und/oder Uretdiongruppen eingesetzt werden, die auf Hexamethylendiisocyanat, Isophorondiisocyanat und/oder 4,4'-Diisocyanatodicyclohexylmethan basieren.

4. Verfahren gemäß einem der Ansprüche 1 bis 3, **dadurch gekennzeichnet, dass** das Blockierungsmittel Benzyl-tert.-butylamin, Butanonoxim, Diisopropylamin, 3,5-Dimethylpyrazol, Triazol und/oder ein Gemisch dieser Verbindungen ist.

5. Verfahren gemäß einem der Ansprüche 1 bis 4, **dadurch gekennzeichnet, dass** das Hydrophilierungsmittel Hydroxypivalinsäure, Milchsäure und/oder Dimethylolpropionsäure ist.

6. Dispersionen erhältlich nach einem der Verfahren gemäß einem der Ansprüche 1 bis 5.

7. Beschichtungen erhältlich mit Dispersionen gemäß Anspruch 6.

8. Substrate beschichtet mit Beschichtungen gemäß Anspruch 7.

9. Bindemittelkombinationen enthaltend Polyisocyanatdispersionen gemäß Anspruch 6.

## Claims

1. Process for preparing polyisocyanate dispersions, wherein
a) the NCO groups of a polyisocyanate component are reacted with
b) 50 to 90 equivalent%, based on the NCO groups of component a), of a thermally eliminable blocking agent,
c) 10 to 45 equivalent%, based on the NCO groups of component a), of a hydroxy carboxylic acid as hydrophilicizing agent, and optionally
d) 0 to 15 equivalent%, based on the NCO groups of component a), of a chain extender component which is at least difunctional relative to isocyanate-reactive groups,
component c) and/or d) being first dissolved in the blocking agent b), then added to the isocyanate component a), and, optionally, further component c) being added in undissolved form, and, before, during or after the dispersing of the polyurethane polymer in water, the carboxylic acid groups of the hydroxy carboxylic acid being neutralized with a base e).

2. Process according to Claim 1, **characterized in that** the equivalent ratio of the NCO groups of the isocyanate component to the isocyanate-reactive groups of the other components is 1:0.6 to 1:1.5.

3. Process according to either of Claims 1 and 2, **characterized in that** in a) polyisocyanates containing biuret, isocyanurate and/or uretdione groups are used which are based on hexamethylene diisocyanate, isophorone diisocyanate and/or 4,4'-diisocyanatodicyclohexylmethane.

4. Process according to any one of Claims 1 to 3, **characterized in that** the blocking agent is benzyl-tert-butylamine, butanone oxime, diisopropylamine, 3,5-dimethylpyrazole, triazole and/or a mixture of these compounds.

5. Process according to any one of Claims 1 to 4, **characterized in that** the hydrophilicizing agent is hydroxypivalic acid, lactic acid and/or dimethylolpropionic acid.

6. Dispersions obtainable by one of the processes according to any one of Claims 1 to 5.

7. Coatings obtainable with dispersions according to Claim 6.

8. Substrates coated with coatings according to Claim 7.

9. Binder combinations comprising polyisocyanate dispersions according to Claim 6.

## Revendications

1. Procédé pour la préparation de dispersions de polyisocyanate, dans lequel on transforme
a) les groupes NCO d'un composant polyisocyanate avec
b) 50 à 90% en équivalent, par rapport aux groupes NCO du composant a), d'un agent de blocage thermiquement dissociable,
c) 10 à 45% en équivalent, par rapport aux groupes NCO du composant a), d'un acide hydroxycarboxylique comme agent d'hydrophilisation et le cas échéant
d) 0 à 15% en équivalent, par rapport aux groupes NCO du composant a), d'au moins un composant d'allongement de chaîne difonctionnel, par rapport aux groupes réactifs avec isocyanate, où
les composants c) et/ou d) sont d'abord dissous dans l'agent de blocage b), puis ajoutés au composant isocyanate a) et du composant c) supplémentaire est éventuellement ajouté sous forme non dissoute et les groupes acide carboxylique de l'acide hydroxycarboxylique sont neutralisés avec une base e) avant, pendant ou après la dispersion du polymère de polyuréthane dans l'eau.

2. Procédé selon la revendication 1, **caractérisé en ce que** le rapport des équivalents de groupes NCO du composant isocyanate aux équivalents de groupes aptes à une réaction avec les groupes isocyanate des autres composants est de 1:0,6 à 1:1,5.

3. Procédé selon l'une quelconque des revendications 1 ou 2, **caractérisé en ce qu'**on utilise dans a) des polyisocyanates avec des groupes biuret, isocyanurate et/ou uretdione, qui sont à base d'hexaméthylènediisocyanate, d'isophoronediisocyanate et/ou de 4,4'-diisocyanatodicyclohexylméthane.

4. Procédé selon l'une quelconque des revendications 1 à 3, **caractérisé en ce que** l'agent de blocage est la benzyl-tert-butylamine, la butanone-oxime, la diisopropylamine, le 3,5-diméthylpyrazole, le triazole et/ou un mélange de ces composés.

5. Procédé selon l'une quelconque des revendications 1 à 4, **caractérisé en ce que** l'agent d'hydrophilisation est l'acide hydroxypivalique, l'acide lactique et/ou l'acide diméthylolpropionique.

6. Dispersions pouvant être obtenues selon l'un quelconque des procédés selon l'une quelconque des revendications 1 à 5.

7. Revêtements pouvant être obtenus avec des dispersions selon la revendication 6.

8. Substrats revêtus avec des revêtements selon la revendication 7.

9. Combinaisons de liants contenant des dispersions de polyisocyanate selon la revendication 6.
